# EUROPEAN PATENT APPLICATION

(11) **EP 4 822 533 A1**
(43) Date of publication of application: **14.10.2026**
(21) Application number: 24902854.9
(22) Date of filing: 11.12.2024
(51) Int. Cl.: G06F 9/54

(54) **COMMUNICATION METHOD AND APPARATUS**

(30) Priority: 15.12.2023 CN 202311739904
(71) Applicant: Huawei Technologies Co., Ltd., Shenzhen, Guangdong 518129 (CN)
(72) Inventor: HUANG, Xietian, Shenzhen, Guangdong 518129 (CN)
(74) Representative: Gill Jennings & Every LLP
(86) International application number: PCT/CN2024/138513
(87) International publication number: WO 2025/124435

(57) **Abstract**

This application discloses a communication method and apparatus, and relates to the communication field, to improve model inference energy efficiency. The communication method includes: A first node sends, to a second node, first information used to query a processing capability and/or energy supply information of at least one third node; the first node receives, from the second node, second information indicating the processing capability and/or the energy supply information of the at least one third node; and the first node determines, based on the second information, at least one target third node configured to execute a task.

## Description

This application claims priority to Chinese Patent Application No. 202311739904.1, filed with the China National Intellectual Property Administration on December 15, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In the field of artificial intelligence (artificial intelligence, AI)/machine learning (machine learning, ML), a number of model parameters is rapidly increasing. This trend brings more accurate results and better performance, but also leads to more energy consumption. AI/ML energy consumption is affected by a plurality of factors. Overall, model energy consumption is mainly distributed in two parts: training and inference execution. In these two parts, energy consumption of inference execution accounts for 80% to 90%, that is, the model energy consumption is mainly concentrated in the inference execution part.

The 3rd generation partnership project (3rd generation partnership project, 3GPP) R18 AIMLMGMT study item addresses model lifecycle management. Currently, scoping discussions for R19 are underway in the standards, with a preliminary agreement to further investigate AI/ML sustainability in R19, focusing on the AI/ML energy consumption and energy efficiency.

Therefore, how to reduce the energy consumption of inference execution in the AI/ML field and improve model inference energy efficiency is an urgent problem to be resolved currently.

### SUMMARY

This application provides a communication method and apparatus, to improve model inference energy efficiency.

The following technical solutions are used in this application, to achieve the foregoing objective.

According to a first aspect, a communication method is provided, applied to a first node. The method may be performed by the first node, or may be performed by a component or an apparatus (for example, a processor, a chip, or a chip system) used in the first node, or may be performed by a logical module or software that can implement all or a part of functions of the first node. The communication method includes: sending, to a second node, first information used to query a processing capability and/or energy supply information of at least one third node; receiving, from the second node, second information indicating the processing capability and/or the energy supply information of the at least one third node; and determining, based on the second information, at least one target third node configured to execute a task.

In the first aspect, the first node first queries the second node for the processing capability, the energy supply information, and/or the like of the third node, and then determines, based on the processing capability, the energy supply information, and/or the like of the third node, the target third node configured to execute the task. In this way, energy consumption of the selected target third node that executes the task can be low (and/or a carbon emission is low), thereby improving energy efficiency in a task execution process.

With reference to the first aspect, in a possible implementation, the method may further include: sending third information to the second node, where the third information indicates a third node that needs to obtain an execution result of the task and the at least one target third node.

In this implementation, the first node notifies and indicates, to the second node via the third information, the third node that needs to obtain the execution result of the task and the target third node, so that the task can be executed.

With reference to the first aspect, in a possible implementation, the second information includes identification information and the corresponding energy supply information of the at least one third node. The method further includes: determining, based on the energy supply information in the second information, time for each target third node to execute the task.

In this implementation, the first node can determine, based on the energy supply information, the time for each target third node to execute the task, thereby ensuring task execution.

With reference to the first aspect, in a possible implementation, the first information further indicates information about a range in which a third node that needs to be queried is located.

In this implementation, the first node further indicates, via the first information, information about a range in which the at least one third node is located. After receiving the first information, the second node can feed back, to the first node, the processing capability and/or the energy supply information of the third node in the information about the range indicated by the first information. The information about the range indicates a geographical range of the third node that needs to be queried. Query is limited to a third node in a specific range, so that subsequent transmission overheads can be reduced.

With reference to the first aspect, in a possible implementation, the method further includes: sending sixth information to the second node, where the sixth information indicates to invoke a historical processing result of the task.

In this implementation, the first node indicates to invoke the historical processing result of the task, and uses the historical processing result to replace an actual task execution process. This can reduce computational power required for executing the task, thereby improving the energy efficiency in the task execution process.

With reference to the first aspect, in a possible implementation, the task includes at least one of the following: model training, model testing, model emulation, model loading, or model inference.

With reference to the first aspect, the processing capability includes at least one of the following: a hardware processing capability, a storage capability, or hardware energy efficiency information. The energy supply information includes at least one of the following: an energy supply energy type, energy availability time, or a carbon emission per unit of energy.

According to a second aspect, a communication method is provided, applied to a second node. The method may be performed by the second node, or may be performed by a component or an apparatus (for example, a processor, a chip, or a chip system) used in the second node, or may be performed by a logical module or software that can implement all or a part of functions of the second node. The communication method includes: receiving first information, where the first information is used to query a processing capability and/or energy supply information of at least one third node; determining second information based on the first information, where the second information indicates the processing capability and/or the energy supply information of the at least one third node; and sending the second information.

In the second aspect, the second node first receives the first information used to query the processing capability and/or the energy supply information of the at least one third node, determines, based on the first information, the second information indicating the processing capability and/or the energy supply information of the at least one third node, and then sends the second information to a first node, so that the first node can determine, based on the processing capability, the energy supply information, and/or the like of the third node, a target third node configured to execute a task. In this way, energy consumption of the selected target third node that executes the task is low (and/or a carbon emission is low), thereby improving energy efficiency in a task execution process.

With reference to the second aspect, in a possible implementation, the method further includes: receiving third information, where the third information indicates a third node that needs to obtain an execution result of the task and the target third node configured to execute the task; and sending fourth information to the target third node that executes the task, where the fourth information indicates the third node that needs to obtain the execution result of the task.

In this implementation, the second node determines, based on the third information, the third node that needs to obtain the execution result of the task and the target third node, and then notifies, based on the fourth information, to the target third node that executes the task, which third node needs to obtain the execution result of the task, so that the task can be executed.

With reference to the second aspect, in a possible implementation, the method further includes: receiving sixth information, where the sixth information indicates to invoke a historical processing result; and sending the sixth information to the target third node.

In this implementation, the sixth information indicating to invoke the historical processing result of the task is received, and the sixth information is sent to the target third node, so that the target third node can use the historical processing result to replace an actual task execution process. This can reduce computational power required for executing the task, thereby improving the energy efficiency in the task execution process.

With reference to the second aspect, in a possible implementation, the first information further indicates information about a range in which a third node that needs to be queried is located.

In this implementation, after receiving the first information, the second node can feed back, to the first node, a processing capability and/or energy supply information of the third node in the information about the range indicated by the first information. The information about the range indicates a geographical range of the third node that needs to be queried. Query is limited to a third node in a specific range, so that subsequent transmission overheads can be reduced.

With reference to the second aspect, in a possible implementation, the method further includes:
obtaining the processing capability and/or the energy supply information of the at least one third node.

In this implementation, the second node obtains the processing capability and/or the energy supply information of the third node, so that the first node can determine, according to a strategy of reducing energy consumption/reducing a carbon emission, the target third node that executes the task, thereby improving energy efficiency of task processing.

According to a third aspect, a communication method is provided, applied to a third node (namely, a target third node) that executes a task. The method may be performed by the target third node, or may be performed by a component or an apparatus (for example, a processor, a chip, or a chip system) used in the target third node, or may be performed by a logical module or software that can implement all or a part of functions of the target third node. The communication method includes: receiving fourth information, where the fourth information indicates a third node that needs to obtain an execution result of the task; receiving a task parameter required for executing the task; executing the task based on the task parameter to obtain the execution result of the task; and sending the execution result to the third node that needs to obtain the execution result of the task.

In the third aspect, the target third node executes the task based on the task parameter, and sends the execution result to the third node that needs to obtain the execution result of the task, thereby meeting a task requirement of the third node that needs to obtain the execution result of the task.

With reference to the third aspect, in a possible implementation, the third node that executes the task stores a historical task parameter and a corresponding historical processing result. Executing the task based on the task parameter to obtain the execution result of the task includes: determining a target historical processing result as the execution result of the task, where the historical task parameter corresponding to the target historical processing result matches the task parameter.

In this implementation, the target third node uses the historical processing result to replace an actual task execution process. This can reduce computational power required for executing the task, thereby improving energy efficiency in a task execution process.

Optionally, in this implementation, the target third node may determine the target historical processing result as the execution result of the task after receiving sixth information indicating to invoke the historical processing result.

According to a fourth aspect, this application provides a communication apparatus. The communication apparatus may be a first node, or a chip or a system-on-a-chip in the first node. The communication apparatus may implement functions performed by the first node according to any one of the first aspect or the possible designs of the first aspect. The functions may be implemented by hardware, or may be implemented by the hardware executing corresponding software. The hardware or the software includes one or more modules corresponding to the foregoing functions. For example, the communication apparatus includes: a transceiver module, configured to send first information to a second node, where the first information is used to query a processing capability and/or energy supply information of at least one third node, and the transceiver module is further configured to receive second information, where the second information indicates the processing capability and/or the energy supply information of the at least one third node; and a processing module, configured to determine, based on the second information, at least one target third node configured to execute a task.

With reference to the fourth aspect, in a possible implementation, the apparatus further includes the transceiver module, configured to send third information to the second node, where the third information indicates a third node that needs to obtain an execution result of the task and the at least one target third node.

With reference to the fourth aspect, in a possible implementation, the second information includes identification information and the corresponding energy supply information of the at least one third node. The processing module is further configured to determine, based on the energy supply information in the second information, time for each target third node to execute the task.

With reference to the fourth aspect, in a possible implementation, the first information further indicates information about a range in which a third node that needs to be queried is located.

With reference to the fourth aspect, in a possible implementation, the transceiver module is further configured to send sixth information to the second node, where the sixth information indicates to invoke a historical processing result of the task.

With reference to the fourth aspect, in a possible implementation, the task includes at least one of the following: model training, model testing, model emulation, model loading, or model inference.

With reference to the fourth aspect, the processing capability includes at least one of the following: a hardware processing capability, a storage capability, or hardware energy efficiency information. The energy supply information includes at least one of the following: an energy supply energy type, energy availability time, or a carbon emission per unit of energy.

According to a fifth aspect, this application provides a communication apparatus. The communication apparatus may be a second node, or a chip or a system-on-a-chip in the second node. The communication apparatus may implement functions performed by the second node according to any one of the second aspect or the possible designs of the second aspect. The functions may be implemented by hardware, or may be implemented by the hardware executing corresponding software. The hardware or the software includes one or more modules corresponding to the foregoing functions. For example, the communication apparatus includes: a transceiver module, configured to receive first information, where the first information is used to query a processing capability and/or energy supply information of at least one third node; and a processing module, configured to determine second information based on the first information, where the second information indicates the processing capability and/or the energy supply information of the at least one third node, and the transceiver module is further configured to send the second information.

With reference to the fifth aspect, in a possible implementation, the transceiver module is further configured to receive third information, where the third information indicates a third node that needs to obtain an execution result of a task and a target third node configured to execute the task.

The transceiver module is further configured to send fourth information to the target third node that executes the task, where the fourth information indicates the third node that needs to obtain the execution result of the task.

With reference to the fifth aspect, in a possible implementation, the transceiver module is further configured to:
receive sixth information, where the sixth information indicates to invoke a historical processing result; and
send the sixth information to the target third node.

With reference to the fifth aspect, in a possible implementation, the first information further indicates information about a range in which a third node that needs to be queried is located.

With reference to the fifth aspect, in a possible implementation, the processing module is further configured to:
obtain the processing capability and/or the energy supply information of the at least one third node via the transceiver module.

According to a sixth aspect, this application provides a communication apparatus. The communication apparatus may be a target third node, or a chip or a system-on-a-chip in the target third node. The communication apparatus may implement functions performed by the target third node according to any one of the third aspect or the possible designs of the third aspect. The functions may be implemented by hardware, or may be implemented by the hardware executing corresponding software. The hardware or the software includes one or more modules corresponding to the foregoing functions. For example, the communication apparatus includes: a transceiver module, configured to receive fourth information, where the fourth information indicates a third node that needs to obtain an execution result of a task, and the transceiver module is further configured to receive a task parameter required for executing the task; and a processing module, configured to execute the task based on the task parameter to obtain the execution result of the task, where the transceiver module is further configured to send the execution result to the third node that needs to obtain the execution result of the task.

With reference to the sixth aspect, in a possible implementation, a third node that executes the task stores a historical task parameter and a corresponding historical processing result. The processing module is specifically configured to determine a target historical processing result as the execution result of the task, where the historical task parameter corresponding to the target historical processing result matches the task parameter.

According to a seventh aspect, this application provides a communication apparatus. The communication apparatus includes a processor and a transceiver. The processor and the transceiver are configured to support the communication apparatus in performing the method according to the first aspect. Further, the communication apparatus may further include a memory. The memory stores computer instructions. The processor may run the computer instructions to perform the method according to the first aspect, the second aspect, or the third aspect.

According to an eighth aspect, this application provides a computer-readable storage medium. The computer-readable storage medium stores computer instructions. When the computer instructions are run, the method according to the first aspect, the second aspect, or the third aspect is performed.

According to a ninth aspect, this application provides a computer program product including instructions. When the computer program product runs on a computer, the computer may be enabled to perform the method according to the first aspect, the second aspect, or the third aspect.

According to a tenth aspect, this application provides a chip. The chip includes a processor and a transceiver. The processor and the transceiver are configured to support a communication apparatus in performing the method according to the first aspect, the second aspect, or the third aspect.

According to an eleventh aspect, this application provides a communication system. The communication system includes a first node and a second node. The first node is configured to perform the method according to the first aspect. The second node is configured to perform the method according to the second aspect.

Optionally, the communication system may further include a third node. The third node is configured to perform the method according to the third aspect.

For beneficial effect described in the fourth aspect to the eleventh aspect of this application, correspondingly refer to beneficial effect analysis in the first aspect, the second aspect, or the third aspect. Details are not described herein again.

### BRIEF DESCRIPTION OF DRAWINGS

FIG. 1 is a diagram of an AI/ML working procedure according to an embodiment of this application;
FIG. 2 is a diagram of an architecture of a communication system according to an embodiment of this application;
FIG. 3 is a diagram of an architecture of another communication system according to an embodiment of this application;
FIG. 4 is a diagram of an architecture of another communication system according to an embodiment of this application;
FIG. 5 is a diagram of an architecture of another communication system according to an embodiment of this application;
FIG. 6 is a diagram of an architecture of another communication system according to an embodiment of this application;
FIG. 7 is a diagram of an architecture of another communication system according to an embodiment of this application;
FIG. 8 is a schematic flowchart of a communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13A and FIG. 13B are a schematic flowchart of another communication method according to an embodiment of this application;
FIG. 14 is a schematic flowchart of another communication method according to an embodiment of this application;
FIG. 15 is a diagram of a structure of a communication apparatus according to an embodiment of this application;
FIG. 16 is a diagram of a structure of another communication apparatus according to an embodiment of this application;
FIG. 17 is a diagram of a structure of another communication apparatus according to an embodiment of this application; and
FIG. 18 is a diagram of a structure of another communication apparatus according to an embodiment of this application.

### DESCRIPTION OF EMBODIMENTS

Before embodiments of this application are described, as shown in Table 1, some terms in embodiments of this application are explained.

**Table 1**

| Network element name | English full name | Descriptions |
|---|---|---|
| O-CU | (Open radio access network, O-RAN) central unit or O-RAN control unit (O-RAN central unit or O-RAN control unit) | It is configured to implement a radio resource control (radio resource control, RRC) layer, a packet data convergence protocol (packet data convergence protocol, PDCP) layer, a service data adaptation protocol (service data adaptation protocol, SDAP) layer, and another control function. |
| O-DU | O-RAN distributed unit (O-RAN distributed unit) | It is based on a lower layer split, and is configured to implement a radio link control (radio link control, RLC) layer, a media access control (media access control, MAC) layer, and a higher layer (close to the MAC layer) of a physical layer (physical layer, PHY), where a higher layer function of the physical layer includes one or more of the following: forward error correction (forward error correction, FEC) coding/decoding, scrambling/descrambling, or modulation/demodulation. |
| O-RU | O-RAN radio unit (O-RAN radio unit) | It is based on a lower layer split, and is configured to implement a lower layer (close to radio frequency) function of the PHY and a radio frequency function, where the lower layer function of the physical layer includes one or more of the following: a fast Fourier transform (fast Fourier transform, FFT)/an inverse fast Fourier transform (inverse fast Fourier transform, iFFT), digital beamforming, or extraction, filtering, and the like of a physical random access channel (physical random access channel, PRACH). |
| | | It is similar to a transmission reception point (transmission reception point, TRP) or a remote radio head (remote radio head, RRH), but includes the lower layer function, for example, the FFT/iFFT or extraction of the PRACH, of the PHY. |
| Non-real-time RIC | Non-real-time RAN intelligent controller (Non-real-time RAN intelligent controller, "non-real-time RIC" for short) | It is sometimes also referred to as a non-RT RIC or an NRT RIC, is used to implement non-real-time intelligent management of a RAN function, and can implement an AI/ML working procedure including model training and model update, and guide an application/function in an nRT RIC according to a strategy. |
| Near-real-time RIC | Near-real-time RAN intelligent controller (Near-real-time RAN intelligent controller, "near-real-time RIC" for short) | It is sometimes also referred to as a near-RT RIC or an nRT RIC, is used to implement near-real-time intelligent management of a RAN, and implements near-real-time control and optimization of a module and a resource in an O-RAN through data collection and a related operation on an E2 interface. |
| A1 interface | A1 interface | It is an interface between an NRT RIC and an nRT RIC, and is used to intelligently and dynamically control a radio resource in an O-RAN. The NRT RIC provides a strategy, enrichment information, an ML model update, and the like for the nRT RIC through the A1 interface, and the nRT RIC provides strategy feedback for the NRT RIC through the A1 interface. |
| E2 interface | E2 interface | The E2 interface is an open interface between two endpoints, and is used to connect a near-RT RIC to a RAN node. The RAN node includes, for example, a DU and a CU in 5G, an O-RAN compatible eNB in 4G, and an O-CU (an O-CU-CP and/or an O-CU-UP) and/or an O-DU in an O-RAN. The RIC may obtain data collection and feedback of the RAN node through the E2 node, and the RAN node may obtain control feedback of the near-RT RIC through the E2 node. |
| O1 interface | O1 interface | It is an interface between a management entity in a service management and orchestration framework (network management) and an O-RAN module, and is used for operation management. FCAPS management, software management, and file management are implemented through this interface. |

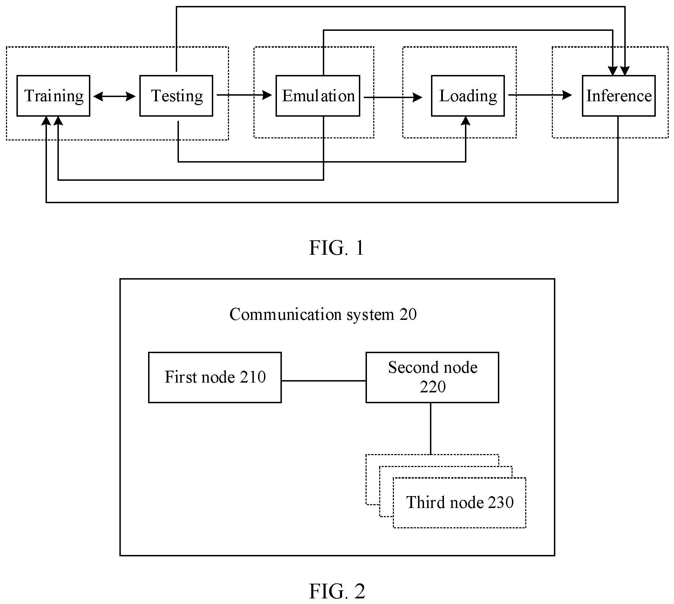

As shown in FIG. 1, an existing AI/ML working procedure mainly includes a training phase (model training and model testing), an emulation phase (model emulation), a deployment phase (model loading), and an inference phase (model inference). In the deployment phase, a model obtained in the training phase is loaded into a target inference function, and is used to perform inference in the inference phase. The current AI/ML working procedure mainly focuses on performance improvement without considering a constraint on energy consumption. As a result, a large amount of energy is consumed in a model use process, causing severe impact on an environment.

AI may enable a machine to have human intelligence, for example, may enable the machine to use computer software and hardware to simulate some intelligent human behaviors. To implement AI, an ML method may be used. For example, the machine obtains an ML model through learning or training via training data, which is model training. The model obtained through model training may represent a mapping from input data to output data, and may be used to perform inference, namely, model inference. In other words, output data corresponding to given input data may be obtained via the model. It may be understood that the model obtained through model training may be an AI model, an ML model, or another model, and the AI model may include the ML model, that is, the ML model is an AI model. The AI model may be considered as a specific method for implementing an AI function, and may represent a mapping relationship or a function between an input and an output of the AI model. The AI function may also be referred to as an AI operation, and may include at least one of the following functions: data collection, model training, model learning, model information release, model reasoning, model inference, or model prediction.

Currently, energy consumption in the model use process may be reduced via a model lightweighting means. A model lightweighting technology is a technology that reduces a number of model parameters while ensuring necessary accuracy, and includes means such as pruning, quantization, and distillation. Model pruning is to remove an "unimportant" model weight, so that the number of model parameters and a computational amount are reduced without compromising model accuracy as much as possible. Model quantization is a process of converting a parameter of the trained model from high precision to low precision, and can effectively reduce model computational overheads, the parameter number, and memory consumption. Model distillation is to transfer knowledge from a complex model to another smaller simple model, so that performance of the simple model approximates as much as possible or exceeds that of the complex model, thereby achieving similar prediction effect with less complexity. The model computational overheads can be reduced via the model lightweighting technology, thereby reducing model inference energy consumption.

However, the lightweighting technology can reduce only the number of model parameters to reduce computational energy consumption. The number of model parameters can also be reduced only by a small portion, to ensure model accuracy. In addition to the model, a factor that actually affects the model inference energy consumption is directly related to a hardware capability of running the model and a number of inference times. For example, an experimental comparison between a GShard model and a GPT-3 model reveals an energy consumption difference that, despite having 619 billion parameters, the GShard model consumes approximately 53 times less energy and produces approximately 127 times fewer net carbon emissions than the GPT-3 model having 175 billion parameters. This is mainly attributed to multiple optimizations of the GShard model in an algorithm and hardware. In other words, the model lightweighting technology reduces the number of model parameters to reduce the computational energy consumption, but the reduction in the energy consumption is quite limited. Even if the model lightweighting technology is used, the model inference energy consumption is still high, and model inference energy efficiency is low.

To resolve the foregoing technical problems, embodiments of this application provide a communication method. Because model inference energy consumption may be estimated by multiplying single inference energy consumption by a number of inference times, in embodiments of this application, model inference energy efficiency is improved from two aspects: the single inference energy consumption and the number of inference times. 1. The energy efficiency is improved by using a transmission resource, where hardware energy efficiency information at different inference locations is obtained, and a deployment location with optimal energy efficiency is selected to perform inference. 2. The energy efficiency is improved by using a storage resource, where a historical inference result is stored, and when a deviation of input data is less than a specified threshold, the historical inference result is directly used for replacement, thereby reducing a number of inference execution times.

With reference to accompanying drawings in this specification, the following describes the communication method and a communication system provided in embodiments of this application.

The communication method provided in embodiments of this application may be applied to various communication systems, for example, a 6th generation (6th generation, 6G) mobile communication system, a long term evolution (long term evolution, LTE) system, a 5th generation (5th generation, 5G) mobile communication system, a wireless fidelity (wireless fidelity, Wi-Fi) system, a future communication system, or a system integrating a plurality of communication systems. This is not limited in embodiments of this application. 5G may also be referred to as new radio (new radio, NR).

A network architecture and a service scenario described in embodiments of this application are intended to describe technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

FIG. 2 is a diagram of an architecture of a communication system according to an embodiment of this application. As shown in FIG. 2, the communication system 20 includes a first node 210 and a second node 220. Optionally, as shown in FIG. 2, the communication system further includes at least one third node 230.

The first node 210 is configured to send first information to the second node 220, where the first information is used to query a processing capability and/or energy supply information of the at least one third node 230.

The second node 220 is configured to: receive the first information, and send second information to the first node 210, where the second information indicates the processing capability and/or the energy supply information of the at least one third node 230.

The first node 210 is further configured to: receive the second information, and determine, based on the second information, at least one target third node 230 configured to execute a task.

Optionally, in this embodiment of this application, the first node may be, for example, a model loading consumer (ML loading consumer), the second node may be, for example, a model loading producer (ML loading producer), and the third node may be, for example, a model inference (ML Inference) device. The following provides several possible application architectures with reference to different scenarios.

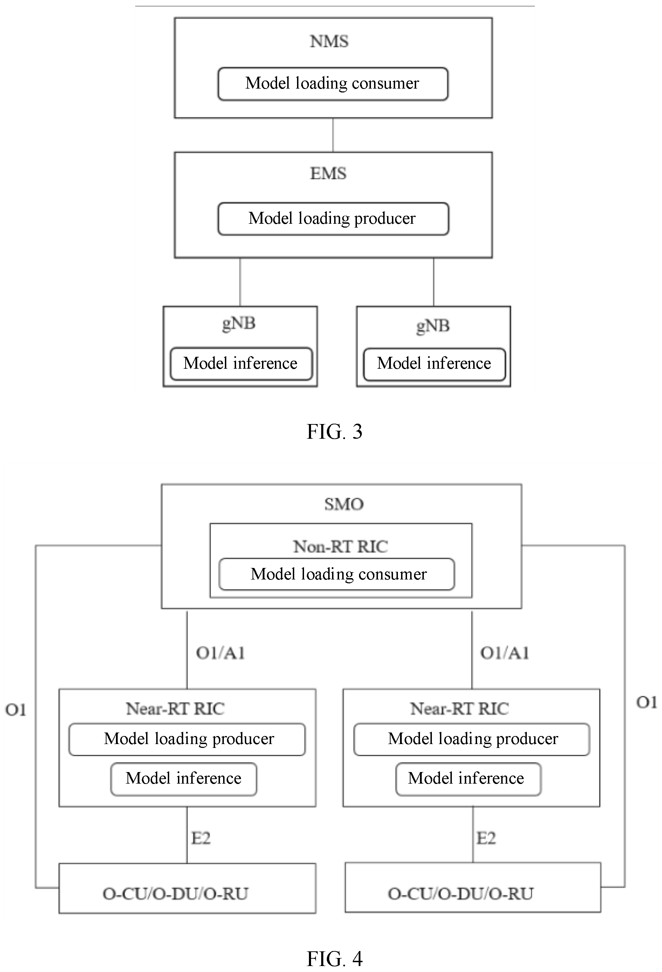

FIG. 3 is a diagram of a communication architecture according to an embodiment of this application. As shown in FIG. 3, the communication architecture includes a network management system (network management system, NMS), an element management system (element management system, EMS), and a radio access network (radio access network, RAN) device.

The NMS is responsible for network operation, management, and maintenance functions, and may also be referred to as a cross-domain management system.

The EMS is configured to manage one or more network elements of a type, and may also be referred to as a domain management system or a single-domain management system.

The RAN device is a device, in a mobile communication system, that connects a fixed part to a wireless part and is connected to a mobile terminal through a wireless channel in the air. In FIG. 3, an example in which the RAN device is a next generation nodeB (next generation nodeB, gNB) is used for illustration.

The NMS serves as a model loading consumer (ML loading consumer). The EMS serves as a model loading producer (ML loading producer) to provide a model loading service. The gNB has a model inference (ML Inference) function that is also referred to as an inference function for short, is responsible for model inference, and inputs data into a model to obtain a corresponding output. The NMS may invoke the model loading service, provided by the EMS, to indicate to load the model into a specified gNB.

In addition, this embodiment of this application is further applicable to an O-RAN architecture or a mobile intelligent function (mobile intelligent function, MIF) architecture.

An O-RAN is intended to implement an intelligent and open access network. The O-RAN is a concept based on RAN interoperability and standardization, and provides a unified interconnection standard for white-box hardware and software of different vendors.

As shown in FIG. 4, in a possible O-RAN architecture, an NMS is represented as a service management and orchestration framework (service management and orchestration framework, SMO), and a non-RT RIC belongs to the SMO, and is an ML loading consumer. A RAN device is divided into a plurality of logical network elements, including O-CU, an O-DU, and O-RU modules. There is no EMS in an O-RAN, and network elements that implement an EMS function are near-RT RICs. The near-RT RICs provide both ML loading producers and ML inference. Specifically, the non-RT RIC serves as the ML loading consumer, the near-RT RICs serve as the ML loading producers, and ML inference is deployed in the near-RT RICs. There are a plurality of near-RT RICs. The non-RT RIC may select a model deployment location based on inference hardware energy efficiency information of the near-RT RICs, with a purpose of maximizing energy efficiency/minimizing a carbon emission.

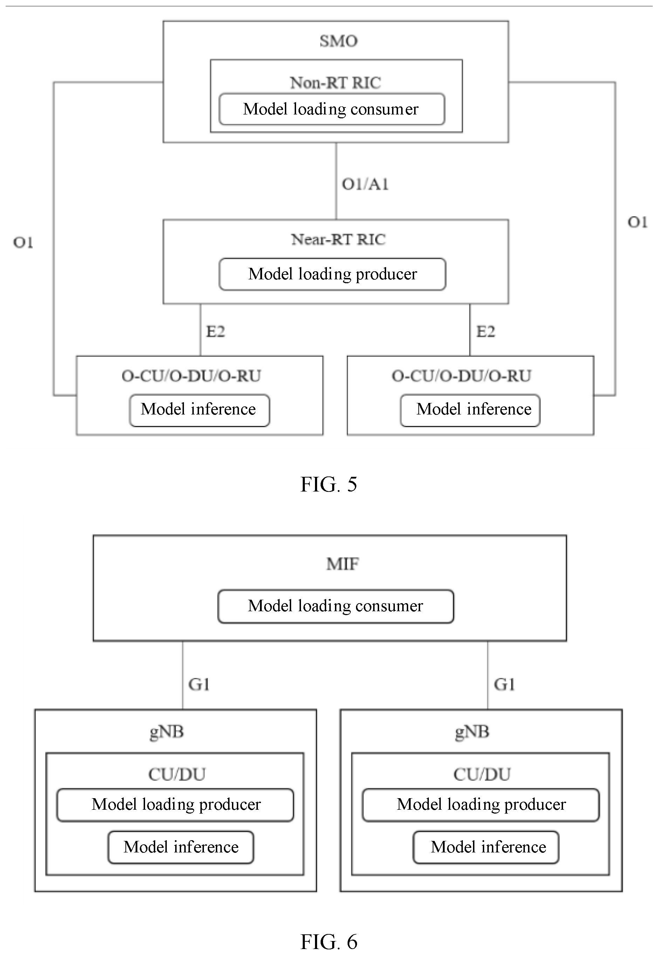

Alternatively, as shown in FIG. 5, in another possible O-RAN architecture, a near-RT RIC provides an ML loading producer, and any one of O-CU, O-DU, and O-RU modules provides ML inference. Specifically, a non-RT RIC serves as an ML loading consumer, the near-RT RIC serves as the ML loading producer, and ML inference is deployed in the O-CUs/O-DUs/O-RUs. There are a plurality of O-CUs/O-DUs/O-RUs. The non-RT RIC may select a model deployment location based on inference hardware energy efficiency information of the O-CUs/O-DUs/O-RUs, with a purpose of maximizing energy efficiency/minimizing a carbon emission.

A MIF is a logical functional entity for AI intelligent service processing in a RAN network, and is used to implement an intelligent data analysis function in a RAN domain. The MIF is connected to a gNB through a G1 interface. A model training function, a model evaluation function, and the like related to an AI model are deployed in the MIF.

As shown in FIG. 6, in a possible MIF architecture, a MIF serves as an ML loading consumer, CUs/DUs in gNBs serve as ML loading producers, and ML inference is also deployed in the CUs/DUs. One MIF manages a plurality of gNBs. The MIF may select a model deployment location based on inference hardware energy efficiency information of the CU/DU, with a purpose of maximizing energy efficiency/minimizing a carbon emission.

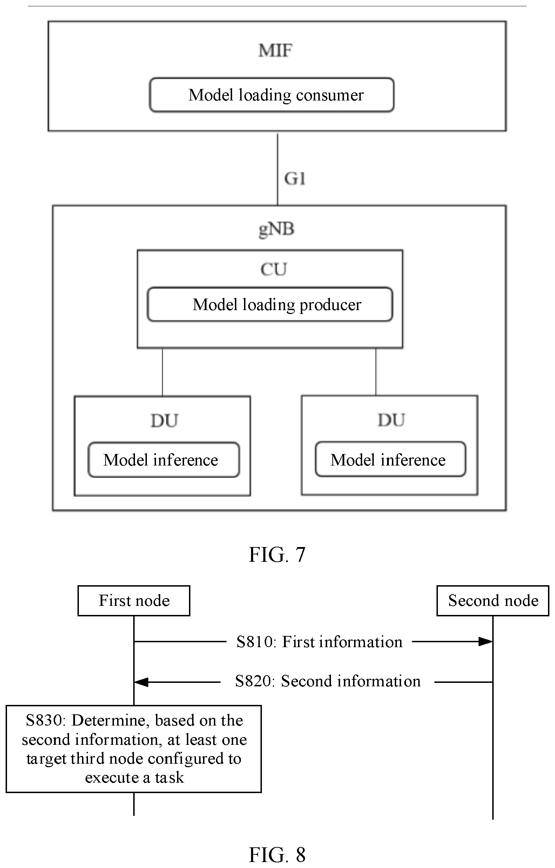

Alternatively, as shown in FIG. 7, in another possible MIF architecture, a MIF serves as an ML loading consumer, a CU serves as an ML loading producer, and ML inference is deployed in DUs. One CU has a plurality of DUs. The MIF may select a model deployment location based on inference hardware energy efficiency information of the DUs, with a purpose of maximizing energy efficiency/minimizing a carbon emission.

It should be understood that the network elements that undertake the ML loading consumer, the ML loading producer, and ML inference in the foregoing examples are merely examples for description. During actual implementation, based on a difference between the network architectures, the network elements that undertake the foregoing roles may alternatively have other designs. This is not limited.

The following describes the communication method provided in embodiments of this application with reference to the communication systems shown in FIG. 2 to FIG. 7.

It should be noted that, in the following embodiments of this application, a name of a message between network elements, a name of each parameter, a name of each piece of information, or the like is merely an example, and may alternatively be another name in another embodiment. This is not specifically limited in the communication method provided in this application.

It may be understood that, in embodiments of this application, each network element may perform a part or all of steps in embodiments of this application, and these steps or operations are merely examples. In embodiments of this application, other operations or variations of the operations may be further performed. In addition, the steps may be performed in a sequence different from that presented in embodiments of this application, and not all the operations in embodiments of this application may be necessarily performed.

FIG. 8 shows an example of a communication method according to an embodiment of this application. The method is described by using interaction between a first node and a second node as an example. Certainly, an action of the first node in the method may alternatively be performed by an apparatus/module in the first node, for example, a chip, a processor, or a processing unit in the first node. An action of the second node in the method may alternatively be performed by an apparatus/module in the second node, for example, a chip, a processor, or a processing unit in the second node. This is not specifically limited in embodiments of this application. In this embodiment of this application, processing performed by a single execution body (for example, the first node or the second node) may alternatively be divided into processing performed by a plurality of execution bodies, and these execution bodies may be logically and/or physically separated. For example, as shown in FIG. 8, the method may include the following steps.

S810: The first node sends first information to the second node. Correspondingly, the second node receives the first information.

The first information is used to query a processing capability and/or energy supply information of at least one third node. The processing capability includes at least one of the following: a hardware processing capability, a storage capability, and hardware energy efficiency information.

In this embodiment of this application, the hardware processing capability and the storage capability may be used to determine, in combination with a number of model parameters, whether the third node can meet a task requirement. The hardware processing capability and the hardware energy efficiency information may be used to determine energy consumption required for executing a task. For example, the hardware energy efficiency information includes at least one of the following: processor average power (average power during running of the processor, which may be obtained through measurement), or electric energy usage efficiency (a percentage of a part that is of electric energy consumed by the processor and that is used for computation).

In this embodiment of this application, the energy supply information includes and indicates an energy type for energy supply to the third node. For example, the energy type may be classified into green energy and non-green energy. Affected by a factor like a natural condition, the green energy usually cannot supply energy all day, but has corresponding energy availability time. The non-green energy usually can supply energy all day.

Optionally, in this embodiment of this application, the energy supply information may further include corresponding energy availability time, a carbon emission per unit of energy, and the like. This is not specifically limited in embodiments of this application.

Optionally, the first information further indicates information about a range in which a third node that needs to be queried is located. The information about the range indicates a geographical range of the third node that needs to be queried. Query is limited to a third node in a specific range, so that subsequent transmission overheads can be reduced.

S820: The second node sends second information to the first node, and correspondingly, the first node receives the second information.

The second information indicates the processing capability and/or the energy supply information of the at least one third node.

Optionally, in this embodiment of this application, the second information includes identification information and the corresponding processing capability and/or energy supply information of the third node.

Optionally, in this embodiment of this application, the second information may further indicate information about a range in which the at least one third node is located.

Optionally, in this embodiment of this application, the second node can obtain the second information from the at least one third node.

S830: The first node determines, based on the second information, at least one target third node configured to execute the task.

Optionally, the task in this embodiment of this application may be at least one of model training, model testing, model emulation, model loading, or model inference. After receiving the second information, the first node may select, as the target third node by comparing processing capabilities and/or energy supply information of third nodes, one or more third nodes, having green power supply and lower energy consumption and meeting a model task requirement, to execute the task. In other words, energy consumption of the target third node is lower in the at least one third node, and/or an energy supply energy type of the target third node is green energy.

In an implementation, if there are a plurality of determined target third nodes, the target third nodes that execute the task may be determined based on time periods. For example, if the target third nodes include a node A and a node B, it may be determined that the node A executes the task from 00:00 to 12:00, and it is determined that the node B executes the task from 12:00 to 24:00. For another example, if a target third node 1 has available green energy without a time limitation, a target third node for actually executing the task is the target third node 1, and an execution time period may not be indicated (by default, there is no time limitation). In another case, if a target third node 1 has available green energy with availability time from 10:00 to 16:00 in a day, a target third node 2 also has available green energy with availability time from 00:00 to 10:00 and from 16:00 to 24:00 in a day, it is determined that target third nodes for actually executing the task are the target third node 1 and the target third node 2, an execution time period of the target third node 1 is from 10:00 to 16:00, and execution time periods of the target third node 2 are from 00:00 to 10:00 and from 16:00 to 24:00. In another case, if a target third node 1 has available green energy with availability time from 10:00 to 16:00 in a day, and none of other target third nodes has available green energy, it is determined that target third nodes for actually executing the task are the target third node 1 and a target third node 2, where the target third node 2 is a target third node with lowest single task energy consumption, an execution time period of the target third node 1 is from 10:00 to 16:00, and execution time periods of the target third node 2 are from 00:00 to 10:00 and from 16:00 to 24:00.

It should be understood that, in the foregoing descriptions, an example in which there are two target third nodes is used. During actual implementation, there may be the plurality of target third nodes. This is not limited in embodiments of this application.

In an implementation, the first information is used to query the processing capability of the at least one third node. Correspondingly, the second information includes the identification information and the corresponding processing capability of the third node, and indicates the processing capability of the at least one third node. In this embodiment of this application, the first node may estimate energy consumption of executing the task. For example, single inference energy consumption=single inference execution time×processor average power×electric energy usage efficiency. The single inference execution time=a single inference computational amount/a processing speed. The processing speed depends on a hardware processing capability. A stronger hardware processing capability indicates a higher processing speed. According to the foregoing principle, after obtaining the hardware processing capability of the at least one third node, the first node may determine single inference energy consumption of the at least one third node based on the hardware processing capability of the at least one third node, and then select one or more third nodes with lower energy consumption as the target third node that executes the task.

In an implementation, the first information is used to query the energy supply information of the at least one third node. Correspondingly, the second information includes the identification information and the corresponding energy supply information of the third node, and indicates the energy supply information of the at least one third node. In this embodiment of this application, the first node may determine, based on the energy type in the energy supply information, which type of energy is used to supply energy to each third node, and then select, as the target third node that executes the task, one or more third nodes that are supplied with green energy.

Optionally, if the energy supply information further includes the corresponding energy availability time of the energy type, which target third node that is supplied with the green energy in each time period may be determined based on the energy availability time to execute the task. In other words, the first node may determine, based on the energy supply information in the second information, time for each target third node to execute the task. For example, if the target third nodes include a node A and a node B, energy availability time of the node A is 00:00 to 12:00, and energy availability time of the node B is 12:00 to 24:00, the first node may determine that the node A executes the task from 00:00 to 12:00, and the node B executes the task from 12:00 to 24:00.

In another implementation, the first information is used to query the processing capability and the energy supply information of the at least one third node. Correspondingly, the second information includes the identification information and the corresponding processing capability and energy supply information of the third node. In this case, the target third node configured to execute the task may be determined by comprehensively considering the energy supply type and the energy consumption.

For example, the first node may preferably determine, based on the energy supply information, candidate third nodes that are supplied with green energy, and then determine, based on processing capabilities of the candidate third nodes, one or more candidate third nodes with lower energy consumption as the target third node that executes the task.

For another example, the first node may estimate single inference carbon emissions based on the processing capabilities and the energy supply information, and select one or more third nodes with a lower carbon emission as the target third node. The single inference carbon emission (estimated)=single inference execution time×processor average power×electric energy use efficiency×a carbon emission per unit of energy (indicated by the energy supply information). The single inference execution time=a single inference computational amount/a processing speed.

In another example, the first node may score the at least one third node based on the energy supply type determined based on the energy supply information and the energy consumption determined based on the processing capability, and select one or more third nodes with a higher score sum as the target third node that executes the task. For example, a score for the green energy is +8 points, and a score for the non-green energy is +4 points. A scoring rule of an energy consumption value is that a reciprocal of the energy consumption value is solved and then multiplied by a common multiplier to obtain a score. For example, if single inference energy consumption of the third node is 25 (which is a principle description herein, and does not limit a unit of the energy consumption), a reciprocal of 25 is 0.04, the common multiplier is 100, and the score is +4 points. It is assumed that a third node A has an energy score of +8 points and an energy consumption score of +1 point. In this case, a final score of the third node A is +9 points. It is assumed that a third node B has an energy score of +4 points and an energy consumption score of +4 points. In this case, a final score of the third node A is +8 points. In the third node A and the third node B, the third node A is preferably selected as the target third node.

In another implementation, in addition to querying the processing capability and/or the energy supply information of the third node, the first information is used to specify the information about the range of the third node that needs to be queried. Correspondingly, the second information includes the identification information and the information about the range of the third node, and at least one of the following: the processing capability and the energy supply information. In this case, the first node may preferably determine the third node in the specific range as a candidate third node based on the information about the range, and then select the target third node from the candidate third node based on a processing capability and/or energy supply information. A rule for determining the "specific range" may be flexibly set. For example, a place whose distance from the second node is less than a preset distance threshold belongs to the "specific range", or a place whose distance from a third node that needs to obtain an execution result of the task is less than the preset distance threshold belongs to the "specific range". This is not specifically limited in embodiments of this application. The target third node is determined based on the information about the range of the third node, so that it can be ensured that the transmission overheads are low.

In this embodiment of this application, the first node first queries the processing capability, the energy supply information, and/or the like of the third node, and determines, based on the processing capability, the energy supply information, and/or the like of the third node, the target third node configured to execute the task. In this way, the energy consumption of the selected target third node that executes the task can be low (and/or a carbon emission is low), thereby improving energy efficiency in a task execution process.

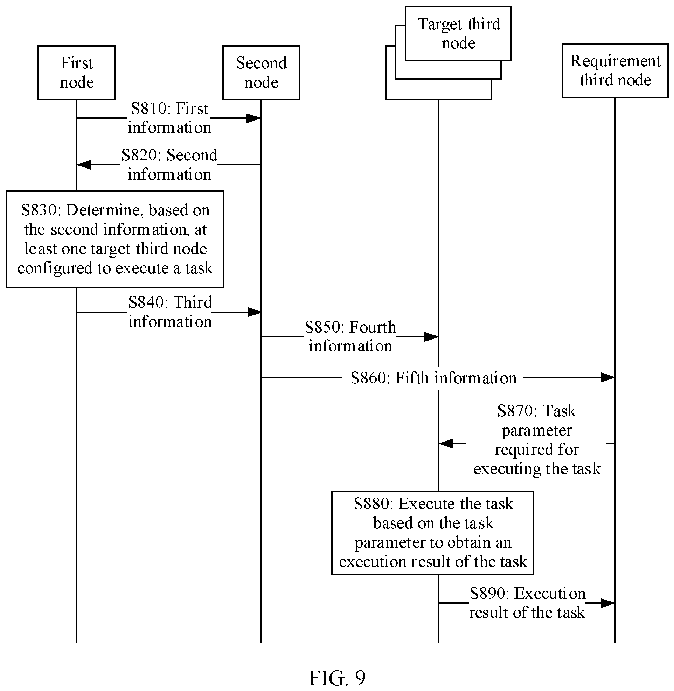

In an embodiment, as shown in FIG. 9, the communication method provided in this embodiment of this application further includes the following steps S840 to S890.

S840: The first node sends third information to the second node, and correspondingly, the second node receives the third information.

The third information indicates the third node (referred to as a requirement third node for short below) that needs to obtain the execution result of the task and the at least one target third node.

Optionally, the third information may further indicate the task that needs to be executed.

For example, the third information includes identification information of the requirement third node and identification information of the at least one target third node. Optionally, the third information further includes identification information or description information of the task that needs to be executed.

Optionally, when there are the plurality of target third nodes, the third information may further indicate time for each target third node to execute the task.

S850: The second node sends fourth information to the target third node, and correspondingly, the target third node receives the fourth information.

The fourth information indicates the requirement third node.

Optionally, the fourth information may further indicate the task that needs to be executed.

In this embodiment of this application, the target third node may determine, based on the fourth information, which third node is the requirement third node.

Optionally, in this embodiment of this application, the target third node may further determine, based on the indicated task, a model that executes the task.

S860: The second node sends fifth information to the requirement third node, and correspondingly, the requirement third node receives the fifth information.

The fifth information indicates the target third node.

Optionally, the fifth information may further indicate the task that needs to be executed.

Optionally, when there are the plurality of target third nodes, the fifth information may further indicate the time for each target third node to execute the task.

S870: The requirement third node sends, to the target third node, a task parameter required for executing the task, and correspondingly, the target third node receives the task parameter required for executing the task.

The requirement third node determines, based on the fifth information in S860, a third node (namely, the target third node) that executes the task, and sends, to the third node based on this, the task parameter required for executing the task.

S880: The target third node executes the task based on the task parameter to obtain the execution result of the task.

After receiving the task parameter, the target third node may execute the task based on the task parameter to obtain the execution result of the task.

S890: The target third node sends the execution result of the task to the requirement third node, and correspondingly, the requirement third node receives the execution result of the task.

The requirement third node receives the execution result of the task, that is, the task requirement of the requirement third node is implemented.

Optionally, in this embodiment of this application, when there are the plurality of target third nodes (that is, the fifth information further indicates the time for each target third node to execute the task), the requirement third node may send the task parameter to the corresponding target third nodes in different task execution time. For example, the target third nodes include a target third node A and a target third node B, and the target third node A and the target third node B respectively correspond to a time period 1 and a time period 2 for executing the task. In this case, the requirement third node sends the task parameter to the target third node A in the time period 1, and sends the task parameter to the target third node B in the time period 2. Correspondingly, the target third node A executes the task in the time period 1 based on the received task parameter, obtains an execution result of the task, and feeds back the execution result to the requirement third node in the time period 1; and the target third node B executes the task in the time period 2 based on the received task parameter, obtains an execution result of the task, and feeds back the execution result to the requirement third node in the time period 2.

In this embodiment of this application, the target third node executes the task based on the task parameter, and sends the execution result of the task to the requirement third node. The energy consumption of the target third node that executes the task is low (and/or the carbon emission is low), thereby improving the energy efficiency in the task execution process.

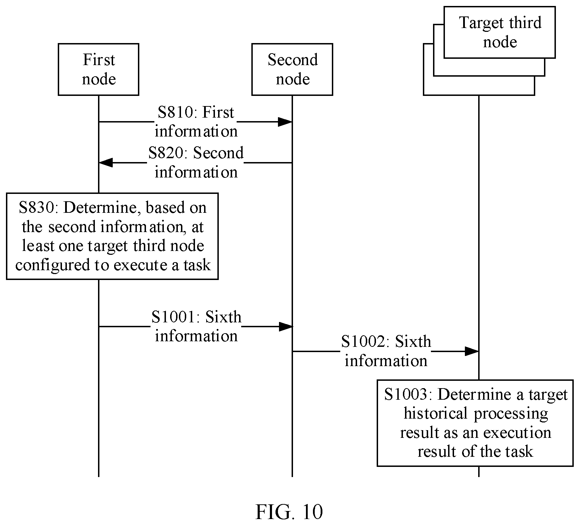

In an embodiment, as shown in FIG. 10, the communication method provided in this embodiment of this application further includes the following steps S1001 to S1003.

S1001: The first node sends sixth information to the second node, and correspondingly, the second node receives the sixth information.

The sixth information indicates to invocate a historical processing result of the task.

Optionally, the sixth information may further indicate a data deviation threshold used to determine whether the historical processing result of the task is available.

In this embodiment of this application, the first node may flexibly design a scenario in which sending of the sixth information is triggered. For example, if the first node finds that a data similarity between a historical task and a task in a current area/time period is quite high, the first node triggers sending of the sixth information. Optionally, the data deviation threshold may be determined based on a similarity of historical data.

S1002: The second node sends the sixth information to the target third node, and correspondingly, the target third node receives the sixth information.

The target third node (namely, the third node that executes the task) stores a historical task parameter and a corresponding historical processing result.

S1003: The target third node determines a target historical processing result as the execution result of the task.

In this embodiment of this application, the historical task parameter corresponding to the target historical processing result matches the current task parameter. In other words, a data difference between the historical task parameter corresponding to the target historical processing result and the current task parameter is less than the data deviation threshold.

In this embodiment of this application, the historical processing result is used to replace an actual task execution process. This can reduce computational power required for executing the task, thereby improving the energy efficiency in the task execution process.

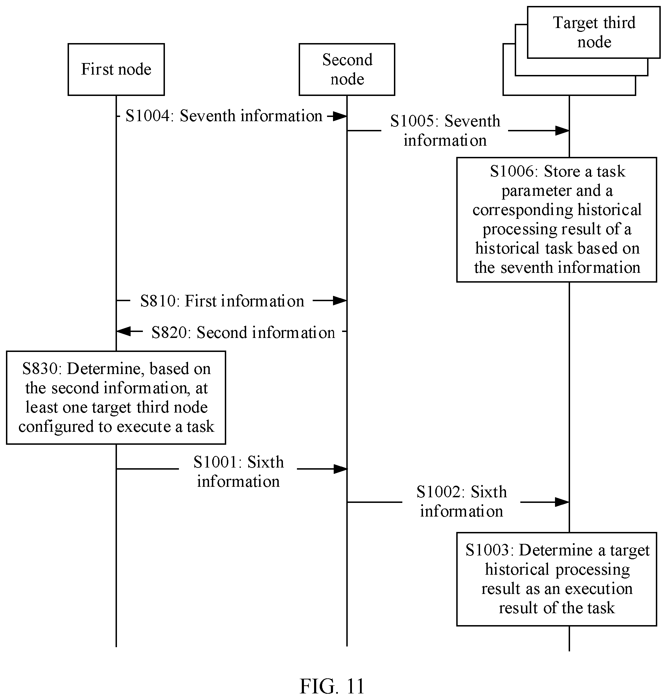

In an embodiment, optionally, as shown in FIG. 11, the communication method provided in this embodiment of this application further includes the following steps S1004 to S1006.

S1004: The first node sends seventh information to the second node, and correspondingly, the second node receives the seventh information.

The seventh information indicates to store the historical processing result.

Optionally, the seventh information further indicates time and/or an area at which and/or in which the historical processing result is stored.

S1005: The second node sends the seventh information to the target third node, and correspondingly, the target third node receives the seventh information.

S1006: The target third node stores the task parameter and the corresponding historical processing result of the historical task based on the seventh information.

The task parameter and the corresponding historical processing result of the historical task that are stored by the target third node may be used to determine the execution result in step S1003.

With reference to the foregoing embodiments, it can be learned that, in this embodiment of this application, the third node with the low energy consumption and/or the low carbon emission is selected to execute the task, thereby improving the energy efficiency in the task execution process. In addition, in this embodiment of this application, a mechanism in which the historical processing result is used to replace the processing result of the current task is designed, to further reduce a number of unnecessary execution times, thereby further improving energy efficiency of task execution.

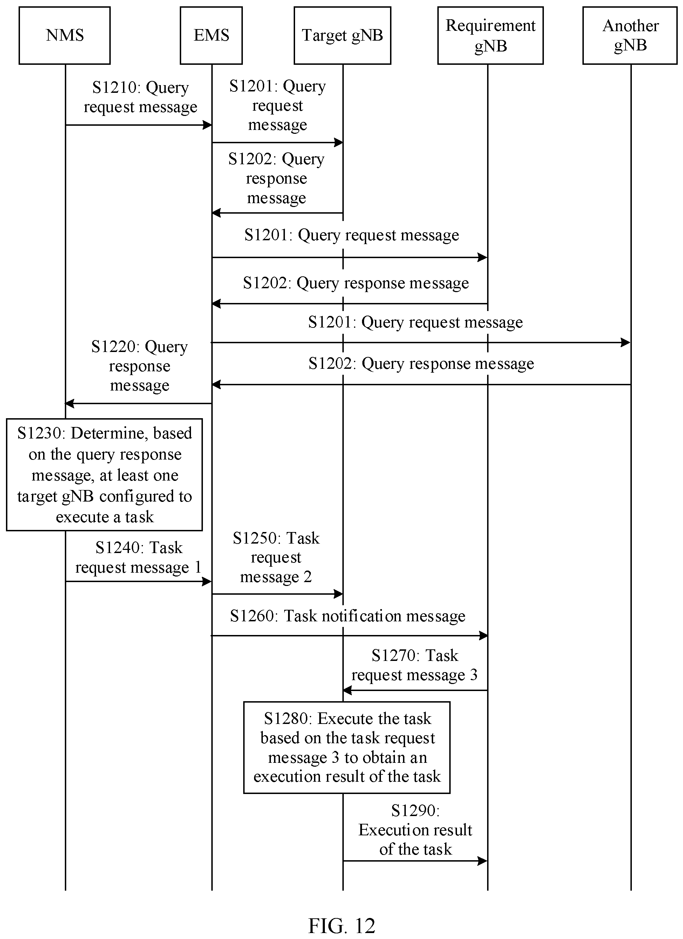

The following uses an example in which the communication system shown in FIG. 2 is applicable to the communication architecture shown in FIG. 3, and provides several communication methods provided in embodiments of this application with reference to the embodiments described in FIG. 8 to FIG. 11, as shown in FIG. 12 to FIG. 14 respectively.

In a possible implementation, in a solution, energy efficiency is improved by using a transmission resource, where hardware energy efficiency information at different inference locations is obtained, and a deployment location with optimal energy efficiency is selected to perform inference. As shown in FIG. 12, the communication method includes the following steps.

S1210: The NMS sends a query request message to the EMS. Correspondingly, the EMS receives the query request message.

The query request message includes first information, and the first information is used to query a processing capability of at least one gNB.

In this embodiment of this application, the processing capability includes, for example, at least one of the following: a hardware processing capability, a storage capability, hardware energy efficiency information, or range information. For related descriptions of the processing capability, refer to related content in step S810 in the embodiment described in FIG. 8. Details are not described herein again.

In this embodiment of this application, the first information may include, for example, at least one of the following: information indicating to query the hardware processing capability of the gNB, information indicating to query the storage capability of the gNB, information indicating to query the hardware energy efficiency information of the gNB, and information indicating to query the range information of the gNB.

S1220: The EMS sends a query response message to the NMS, and correspondingly, the NMS receives the query response message.

The query response message includes second information, and the second information indicates the processing capability of the at least one gNB.

In this embodiment of this application, the second information may include, for example, identification information of the at least one gNB and at least one of the following: the hardware processing capability of the at least one gNB, the storage capability of the at least one gNB, or the hardware energy efficiency information of the at least one gNB. It may be understood that a type of information included in the second information depends on query content of the first information. For example, if the first information is used to query information about the hardware processing capability of the gNB, the second information includes the identification information of the gNB and the information about the corresponding hardware processing capability. For another example, if the first information is used to query information about the hardware processing capability and the hardware energy efficiency information of the gNB, the second information includes the identification information of the gNB, the information about the corresponding hardware processing capability, and the corresponding hardware energy efficiency information.

For related descriptions of the second information, refer to related content in step S820 in the embodiment described in FIG. 8. Details are not described herein again.

In a possible implementation, in this embodiment of this application, the EMS may store the processing capability of the at least one gNB. In this case, after receiving the query request message, the EMS may send the query response message to the NMS.

In another possible implementation, in this embodiment of this application, the EMS does not store the processing capability of the at least one gNB. In this case, after receiving the query request message, the EMS needs to query the at least one gNB for the processing capability of the gNB. For example, as shown in FIG. 12, the method includes: S1201: The EMS sends the query request message to the at least one gNB (for example, including a target gNB, a requirement gNB, and another gNB). Correspondingly, the at least one gNB receives the query request message from the EMS. S1202: The at least one gNB sends a query response message to the EMS. Correspondingly, the EMS receives the query response message from the at least one gNB. For related descriptions of the query request message and the query response message, refer to steps S1210 and S1220. Details are not described herein again.

It should be noted that the query response message in step S1202 indicates the processing capability of the gNB that replies with the query response message, and the query response message in step S1220 indicates a processing capability of one or more gNBs. This applies throughout and is not repeated below. For example, second information in a query response message with which the target gNB replies to the EMS indicates a processing capability of the target gNB, second information in a query response message with which the requirement gNB replies to the EMS indicates a processing capability of the requirement gNB, and second information in a query response message with which the another gNB replies to the EMS indicates a processing capability of the another gNB; and the second information in the query response message with which the EMS replies to the NMS indicates the processing capability of the target gNB, the processing capability of the requirement gNB, and the processing capability of the another gNB.

It should be understood that the target gNB is a gNB configured to execute a task, the requirement gNB is a gNB that needs to obtain an execution result of the task, and the another gNB is a gNB, other than the target gNB or the requirement gNB, that is queried by using the query request message in S1210.

S1230: The NMS determines, based on the query response message, at least one target gNB configured to execute the task.

For descriptions of how the NMS determines, based on the query response message, the at least one target gNB configured to execute the task, refer to related content in step S830 in the embodiment described in FIG. 8. Details are not described herein again.

S1240: The NMS sends a task request message 1 to the EMS, and correspondingly, the EMS receives the task request message 1 from the NMS.

The task request message 1 includes third information, and the third information indicates the requirement gNB and the at least one target gNB (in FIG. 12, one target gNB is used as an example for illustration). Optionally, the third information may further indicate the task. In this embodiment, a gNB other than the requirement gNB and the target gNB is referred to as another gNB.

In this embodiment of this application, the third information may include, for example, identification information of the task, identification information of the requirement gNB, and identification information of the target gNB. For example, when the task is model loading, the identification information of the task is identification information of a model, and the task request message 1 may be further replaced with a model loading request 1. For descriptions of the third information, refer to related content in step S840 in the embodiment described in FIG. 9. Details are not described herein again.

S1250: The EMS sends a task request message 2 to the target gNB, and correspondingly, the target gNB receives the task request message 2 from the EMS.

The task request message 2 includes fourth information, and the fourth information includes the identification information of the requirement gNB. Optionally, the fourth information may further include the identification information of the task. For example, when the task is model loading, the identification information of the task is identification information of a model, and the task request message 2 may be further replaced with a model loading request 2. For descriptions of the fourth information, refer to related content in step S850 in the embodiment described in FIG. 9. Details are not described herein again.

S1260: The EMS sends a task notification message to the requirement gNB, and correspondingly, the requirement gNB receives the task notification message from the EMS.

The task notification message includes fifth information, and the fifth information includes the identification information of the target gNB. Optionally, the fifth information may further include the identification information of the task. For example, when the task is model loading, the identification information of the task is identification information of a model, and the task notification message may be further replaced with a model loading notification. For descriptions of the fifth information, refer to related content in step S860 in the embodiment described in FIG. 9. Details are not described herein again.

S1270: The requirement gNB sends a task request message 3 to the target gNB, and correspondingly, the target gNB receives the task request message 3 from the requirement gNB.

The task request message 3 includes a task parameter required for executing the task. For example, when the task is model inference, the task request message 3 may be further replaced with a model inference request. For descriptions of the task parameter required for executing the task, refer to related content in step S870 in the embodiment described in FIG. 9. Details are not described herein again.

S1280: The target gNB executes the task based on the task request message 3 to obtain the execution result of the task.

After receiving the task parameter in the task request message 3, the target gNB may execute the task based on the task parameter to obtain the execution result of the task. For related descriptions, refer to step S880 in the embodiment described in FIG. 9. Details are not described herein again.

S1290: The target gNB sends the execution result of the task to the requirement gNB, and correspondingly, the requirement gNB receives the execution result of the task.

For example, when the task is model inference, the execution result of the task may be further replaced with a model inference result. For descriptions of the execution result of the task, refer to related content in step S890 in the embodiment described in FIG. 9. Details are not described herein again.

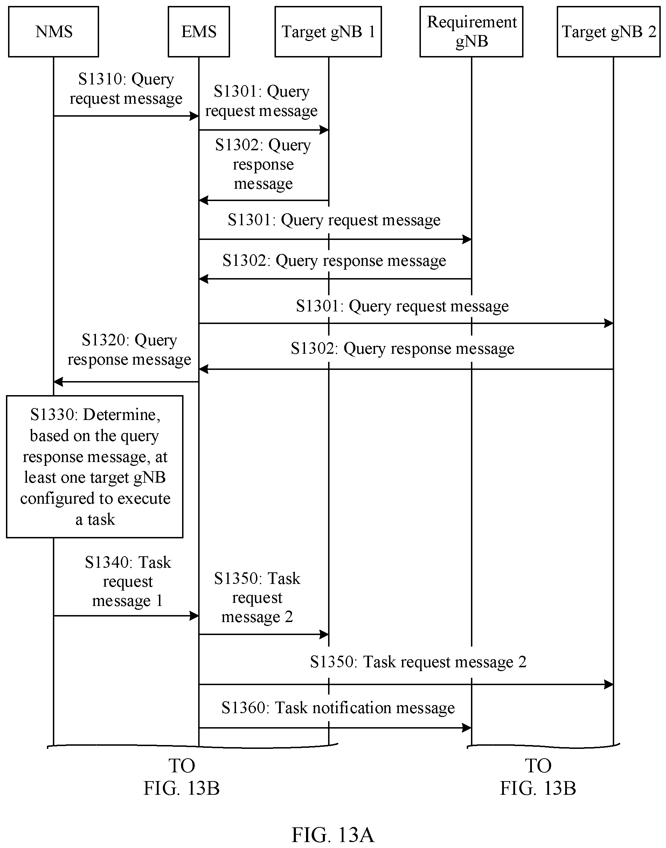

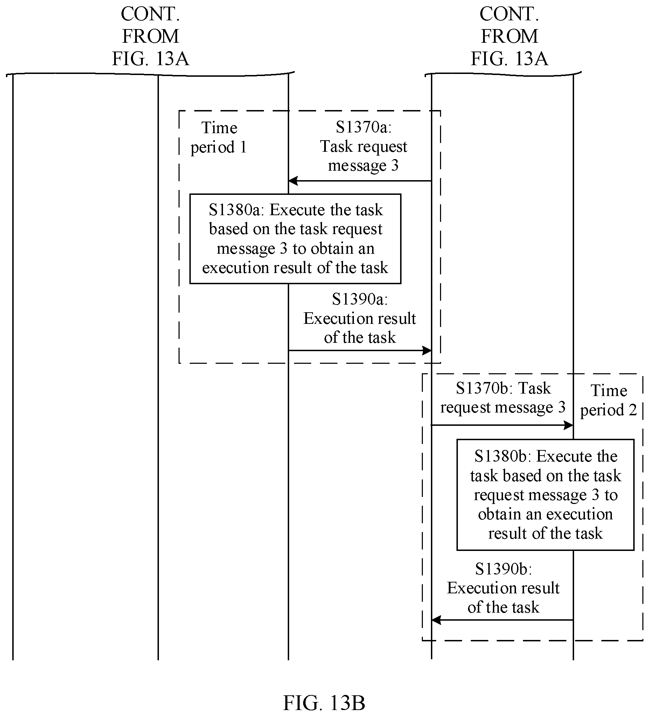

In another possible implementation, similar to that in the embodiment described in FIG. 12, in a solution, energy efficiency is improved by using a transmission resource, where hardware energy efficiency information at different inference locations is obtained, and a deployment location with optimal energy efficiency is selected to perform inference. A difference from the embodiment described in FIG. 12 lies in, for example, that, in this implementation, in a scenario in which green energy is used, hardware processing capabilities and green energy resource information at different inference locations may be obtained, and a deployment location with a lowest carbon emission is selected to perform inference. As shown in FIG. 13A and FIG. 13B, for example, target third nodes include a target gNB 1 and a target gNB 2, where an energy supply energy type of the target gNB 1 is green energy, and an energy supply energy type of the target gNB 2 is non-green energy. The communication method includes the following steps.

S1310: The NMS sends a query request message to the EMS. Correspondingly, the EMS receives the query request message.

The query request message includes first information, and the first information is used to query a processing capability and energy supply information of at least one gNB.

In this embodiment of this application, the processing capability includes, for example, at least one of the following: a hardware processing capability, a storage capability, hardware energy efficiency information, or range information. The energy supply information includes an energy type. Optionally, the energy supply information further includes energy availability time, a carbon emission per unit of energy, and/or the like. For related descriptions of the processing capability and the energy supply information, refer to related content in step S810 in the embodiment described in FIG. 8. Details are not described herein again.

In this embodiment of this application, the first information may include, for example, at least one of the following: information indicating to query the hardware processing capability of the gNB, information indicating to query the storage capability of the gNB, information indicating to query the hardware energy efficiency information of the gNB, or information indicating to query the range information of the gNB; and the first information includes information used to query the energy type of the gNB.

S1320: The EMS sends a query response message to the NMS, and correspondingly, the NMS receives the query response message.

The query response message includes second information, and the second information indicates the processing capability and the energy supply information of the at least one gNB.

In this embodiment of this application, the second information may include, for example, identification information of the at least one gNB and at least one of the following: an energy supply type of the at least one gNB, the energy availability time of the at least one gNB, the hardware processing capability of the at least one gNB, the storage capability of the at least one gNB, or the hardware energy efficiency information of the at least one gNB. It may be understood that a type of information included in the second information depends on query content of the first information. For example, if the first information is used to query information about the hardware processing capability of the gNB, the second information includes the identification information of the gNB and information about the corresponding hardware processing capability. For another example, if the first information is used to query information about the hardware processing capability and the hardware energy efficiency information of the gNB, the second information includes the identification information of the gNB, the information about the corresponding hardware processing capability, and the corresponding hardware energy efficiency information. For another example, if the first information is used to query information about the hardware processing capability, the energy supply type, and the hardware energy efficiency information of the gNB, the second information includes the identification information of the gNB, the information about the corresponding hardware processing capability, the corresponding energy supply type, and the corresponding hardware energy efficiency information.

For related descriptions of the second information, refer to related content in step S820 in the embodiment described in FIG. 8. Details are not described herein again.

In a possible implementation, in this embodiment of this application, the EMS may store the processing capability and the energy supply information of the at least one gNB. In this case, after receiving the query request message, the EMS may send the query response message to the NMS.

In another possible implementation, in this embodiment of this application, the EMS does not store the processing capability and the energy supply information of the at least one gNB. In this case, after receiving the query request message, the EMS needs to query the at least one gNB for the processing capability and the energy supply information of the gNB. For example, as shown in FIG. 13A and FIG. 13B, the method includes: S1301: The EMS sends the query request message to the at least one gNB (for example, including a target gNB, a requirement gNB, and another gNB). Correspondingly, the at least one gNB receives the query request message from the EMS. S1302: The at least one gNB sends a query response message to the EMS. Correspondingly, the EMS receives the query response message from the at least one gNB. For related descriptions of the query request message and the query response message, refer to steps S1310 and S1320. Details are not described herein again.

It should be noted that the query response message in step S1302 indicates the processing capability and the energy supply information of the gNB that replies with the query response message, and the query response message in step S1320 indicates a processing capability and energy supply information of one or more gNBs. For example, second information in a query response message with which the target gNB replies to the EMS indicates a processing capability and energy supply information of the target gNB, second information in a query response message with which the requirement gNB replies to the EMS indicates a processing capability and energy supply information of the requirement gNB, and second information in a query response message with which the another gNB replies to the EMS indicates a processing capability and energy supply information of the another gNB; and the second information in the query response message with which the EMS replies to the NMS indicates the processing capability and the energy supply information of the target gNB, the processing capability and the energy supply information of the requirement gNB, and the processing capability and the energy supply information of the another gNB.

S1330: The NMS determines, based on the query response message, at least one target gNB configured to execute a task.

The NMS selects at least one gNB with a lowest carbon emission as the target gNB based on processing capabilities and energy supply information of the gNBs in the query response message. If there are a plurality of target gNBs, and energy supply information further includes energy availability time corresponding to energy types, which target gNB that is supplied with the green energy in each time period may be determined based on the energy availability time to execute the task.

For example, in this embodiment, the target gNBs include the target gNB 1 and the target gNB 2, an energy supply energy type of the target gNB 1 is green energy, and an energy supply energy type of the target gNB 2 is non-green energy. The target gNB 1 corresponds to a time period 1 for executing the task, and the target gNB 2 corresponds to a time period (for example, a time period 2) other than the time period 1 for executing the task.

For descriptions of how the NMS determines, based on the query response message, the at least one target gNB configured to execute the task, refer to related content in step S830 in the embodiment described in FIG. 8. Details are not described herein again.

S1340: The NMS sends a task request message 1 to the EMS, and correspondingly, the EMS receives the task request message 1 from the NMS.

The task request message 1 includes third information, and the third information indicates the requirement gNB and the at least one target gNB (for example, the target gNB 1 and the target gNB 2 in FIG. 13A and FIG. 13B). Optionally, the third information may further indicate the task. In this embodiment, a gNB other than the requirement gNB and the target gNB is referred to as another gNB. For descriptions of the third information, refer to related content in step S1240 in the embodiment described in FIG. 12. Details are not described herein again.

S1350: The EMS sends a task request message 2 to the target gNB, and correspondingly, the target gNB receives the task request message 2 from the EMS.

The task request message 2 includes fourth information, and the fourth information includes identification information of the requirement gNB. Optionally, the fourth information may further include identification information of the task. For descriptions of the task request message 2, refer to related content in step S1250 in the embodiment described in FIG. 12. Details are not described herein again.

As described above, there may be the plurality of target gNBs. In this embodiment of this application, the target gNBs include the target gNB 1 and the target gNB 2. In this case, the EMS separately sends the task request message 2 to the target gNB 1 and the target gNB 2. Correspondingly, the target gNB 1 and the target gNB 2 receive the task request message 2 from the EMS.

S1360: The EMS sends a task notification message to the requirement gNB, and correspondingly, the requirement gNB receives the task notification message from the EMS.

The task notification message includes fifth information, and the fifth information includes identification information of the target gNBs (for example, the target gNB 1 and the target gNB 2 in FIG. 13A and FIG. 13B). Optionally, the fifth information may further include the identification information of the task. For descriptions of the task notification message, refer to related content in step S1260 in the embodiment described in FIG. 12. Details are not described herein again.

In the time period 1, this embodiment of this application further includes the following steps S1370a to S1390a.

S1370a: The requirement gNB sends a task request message 3 to the target gNB 1 in the time period 1, and correspondingly, the target gNB 1 receives the task request message 3 from the requirement gNB in the time period 1.

The task request message 3 includes a task parameter required for executing the task. For descriptions of the task request message 3, refer to related content in step S1270 in the embodiment described in FIG. 12. Details are not described herein again.

S1380a: The target gNB 1 executes the task in the time period 1 based on the task request message 3 to obtain an execution result of the task.

After receiving the task parameter carried in the task request message 3, the target gNB 1 may execute the task based on the task parameter to obtain the execution result of the task. For related descriptions, refer to step S880 in the embodiment described in FIG. 8. Details are not described herein again.

S1390a: The target gNB 1 sends the execution result of the task to the requirement gNB in the time period 1, and correspondingly, the requirement gNB receives the execution result of the task from the target gNB 1 in the time period 1.

For related descriptions of S1390, refer to related content in step S1290 in the embodiment described in FIG. 12. Details are not described herein again.

Similarly, in the time period 2, this embodiment of this application further includes the following steps S1370b to S1390b.

S1370b: The requirement gNB sends the task request message 3 to the target gNB 2 in the time period 2, and correspondingly, the target gNB 2 receives the task request message 3 from the requirement gNB in the time period 2.

S1380b: The target gNB 2 executes the task in the time period 2 based on the task request message 3 to obtain an execution result of the task.

S1390b: The target gNB 2 sends the execution result of the task to the requirement gNB in the time period 2, and correspondingly, the requirement gNB receives the execution result of the task from the target gNB 2 in the time period 2.

It should be understood that, compared with those in S1370a to S1390a performed in the time period 1, although a target gNB that implements S1370b to S1390b in the time period 2 changes from the target gNB 1 to the target gNB 2, implementation principles of the steps are the same. For related descriptions of the steps in the time period 2, refer to descriptions of corresponding steps in the time period 1. Details are not described herein again.

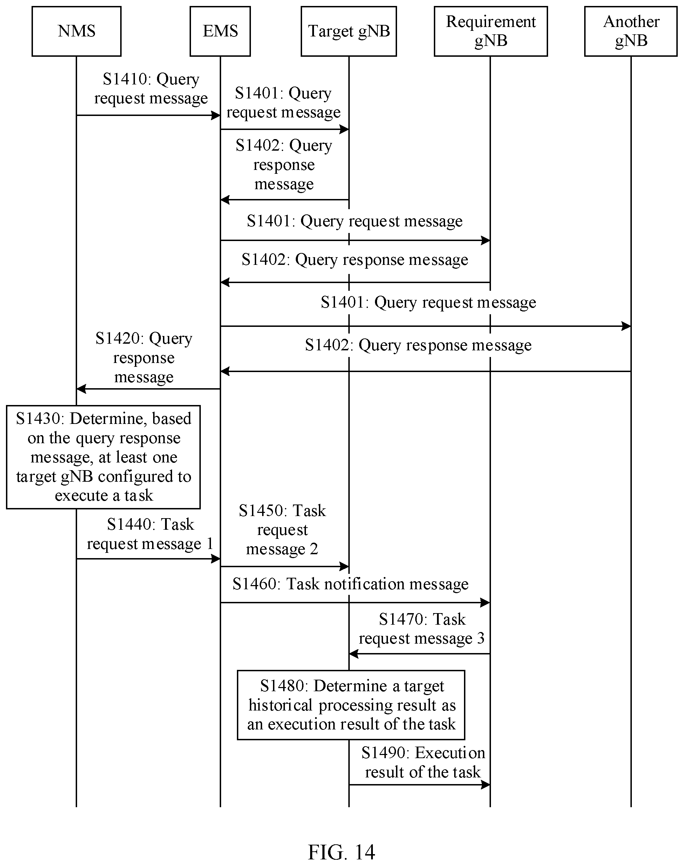

In another possible implementation, in a solution, energy efficiency is improved by using a storage resource, where a historical inference result is stored, and when a deviation of input data is less than a specified threshold, the historical inference result is directly used for replacement, thereby reducing a number of inference execution times. As shown in FIG. 14, the communication method may include the following steps.

S1410: The NMS sends a query request message to the EMS. Correspondingly, the EMS receives the query request message from the NMS.

For descriptions of the query request message, refer to descriptions in step S1210 in FIG. 12 or refer to descriptions in step S1310 in FIG. 13A and FIG. 13B. Details are not described herein again.

S1420: The EMS sends a query response message to the NMS, and correspondingly, the NMS receives the query response message from the EMS.

For descriptions of the query response message, refer to descriptions in step S1220 in FIG. 12 or refer to descriptions in step S1320 in FIG. 13A and FIG. 13B. Details are not described herein again.

Optionally, the communication method may further include: S1401: The EMS sends the query request message to at least one gNB (for example, including a target gNB, a requirement gNB, and another gNB). Correspondingly, the at least one gNB receives the query request message from the EMS. S1402: The at least one gNB sends a query response message to the EMS. Correspondingly, the EMS receives the query response message from the at least one gNB. For descriptions of S1401 and S1402, refer to the descriptions of step S1201 and step S1202 in FIG. 12 or refer to the descriptions of step S1301 and step S1302 in FIG. 13A and FIG. 13B. Details are not described herein again.

S1430: The NMS determines, based on the query response message, at least one target gNB configured to execute a task.

For a related implementation of step S1430, refer to the descriptions of step S1230 in FIG. 12 or refer to the descriptions of step S1330 in FIG. 13A and FIG. 13B. Details are not described herein again.

S1440: The NMS sends a task request message 1 to the EMS, and correspondingly, the EMS receives the task request message 1 from the NMS.

The task request message 1 includes third information and sixth information. For descriptions of the third information, refer to related content in step S1240 in the embodiment described in FIG. 12. Details are not described herein again. The sixth information indicates to invocate a historical processing result of the task. Optionally, the sixth information may further indicate a data deviation threshold used to determine whether the historical processing result of the task is available. For example, the sixth information may include the data deviation threshold and a historical invocation indication message. For descriptions of the sixth information, refer to related descriptions in step S1001 in FIG. 10. Details are not described herein again.

For descriptions of the task request message 1, refer to descriptions in step S1240 in FIG. 12 or refer to descriptions in step S1340 in FIG. 13A and FIG. 13B. Details are not described herein again.

S1450: The EMS sends a task request message 2 to the target gNB, and correspondingly, the target gNB receives the task request message 2 from the EMS.

The task request message 2 includes the sixth information and fourth information. For descriptions of the sixth information, refer to related descriptions in S1440. Details are not described herein again. For descriptions of the fourth information and the task request message 2, refer to descriptions in step S1250 in FIG. 12 or refer to descriptions in step S1350 in FIG. 13A and FIG. 13B. Details are not described herein again.

S1460: The EMS sends a task notification message to the requirement gNB, and correspondingly, the requirement gNB receives the task notification message from the EMS.

For descriptions of the task notification message, refer to descriptions in step S1260 in FIG. 12 or refer to descriptions in step S1360 in FIG. 13A and FIG. 13B. Details are not described herein again.

S1470: The requirement gNB sends a task request message 3 to the target gNB, and correspondingly, the target gNB receives the task request message 3 from the requirement gNB.

For descriptions of the task request message 3, refer to descriptions in step S1270 in FIG. 12 or refer to descriptions in step S1370 in FIG. 13A and FIG. 13B. Details are not described herein again.

S1480: The target gNB determines a target historical processing result as an execution result of the task.

A data difference between a historical task parameter corresponding to the target historical processing result and a task parameter in the task request message 3 in S1470 is less than the data deviation threshold. For a process of determining the execution result of the task, refer to the descriptions of step S1003 in FIG. 10. Details are not described again.

S1490: The target gNB sends the execution result of the task to the requirement gNB, and correspondingly, the requirement gNB receives the execution result of the task from the target gNB.

It should be understood that message names in the steps in FIG. 12 to FIG. 14 are examples for description, and during actual implementation, may alternatively be other names. This is not limited.

Optionally, in this embodiment of this application, the communication system shown in FIG. 2 may be further used in the communication architectures shown in FIG. 4 to FIG. 7. For a related interaction procedure for performing the communication method in this embodiment of this application, refer to the embodiments described in FIG. 12 to FIG. 14. A difference from the embodiment shown in FIG. 12, FIG. 13A and FIG. 13B, or FIG. 14 lies in that, in this embodiment, execution bodies that perform the steps in the embodiments described in FIG. 12 to FIG. 14 change. The following provides descriptions with reference to examples.

For example, when the communication system shown in FIG. 2 is used in the communication architecture shown in FIG. 4, in the embodiments described in FIG. 8 to FIG. 11, the first node may be the non-RT RIC, the non-RT RIC performs steps performed by the first node, both the second node and the third node are the near-RT RICs, and the near-RT RICs perform steps performed by the second node and the third node.

In another example, when the communication system shown in FIG. 2 is used in the communication architecture shown in FIG. 5, in the embodiments described in FIG. 8 to FIG. 11, the first node may be the non-RT RIC, the non-RT RIC performs steps performed by the first node, the second node is the near-RT RIC, the near-RT RIC performs steps performed by the second node, the third node is the O-CU/O-DU/O-RU, and the O-CU/O-DU/O-RU performs steps performed by the third node.

In another example, when the communication system shown in FIG. 2 is used in the communication architecture shown in FIG. 6, in the embodiments described in FIG. 8 to FIG. 11, the first node may be the MIF, the MIF performs steps performed by the first node, and both the second node and the third node may be CUs/DUs in the gNBs, and the CU/DUs in the gNBs perform steps performed by the second node and the third node.

In another example, when the communication system shown in FIG. 2 is used in the communication architecture shown in FIG. 7, in the embodiments described in FIG. 8 to FIG. 11, the first node may be the MIF, the MIF performs steps performed by the first node, the second node is the CU in a gNB, the CU in the gNB performs steps performed by the second node, the third node is the DU in the gNB, and the DU in the gNB performs steps performed by the third node.

With reference to the implementations in the foregoing architectures, it can be learned that, in this embodiment of this application, a model inference node with low energy consumption and/or a low carbon emission is selected to execute the task, thereby improving energy efficiency in a task execution process. In addition, in this embodiment of this application, a mechanism in which the historical processing result is used to replace the processing result of the current task is designed, to further reduce a number of unnecessary execution times, thereby further improving energy efficiency of task execution.

The foregoing mainly describes the solutions provided in embodiments of this application from a perspective of execution logic of each step. It may be understood that, to implement the foregoing functions, each node, for example, the first node, includes a corresponding hardware structure and/or software module for performing each function. A person skilled in the art should be easily aware that, in combination with algorithm steps of the examples described in embodiments disclosed in this specification, the methods in embodiments of this application can be implemented by hardware, software, or a combination of the hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first node may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division during actual implementation.

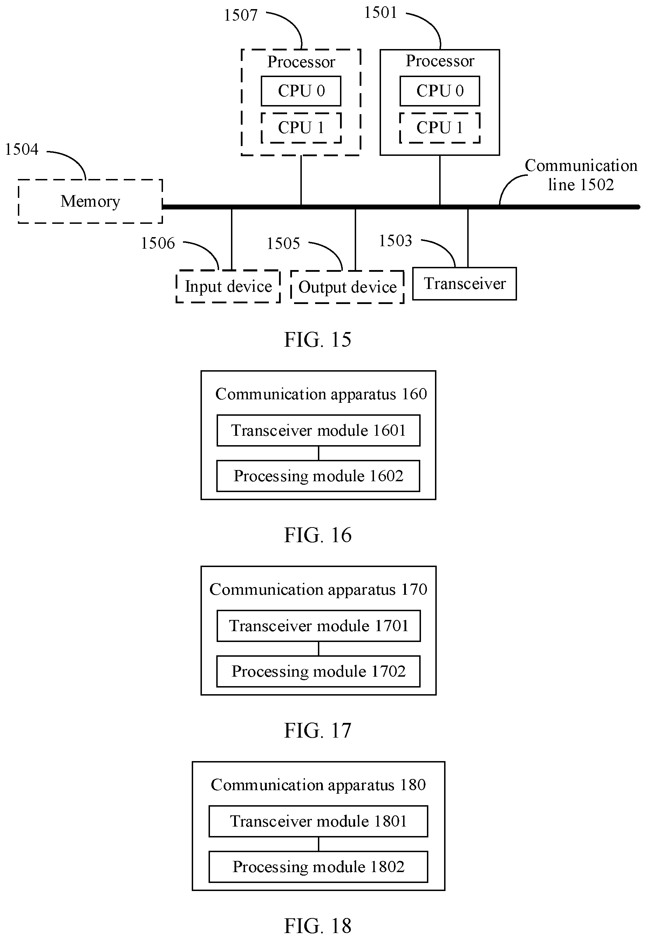

During specific implementation, each node shown in this application may use a composition structure shown in FIG. 15 or include components shown in FIG. 15. FIG. 15 is a diagram of a structure of a communication apparatus according to an embodiment of this application. When the communication apparatus has functions of the first node described in embodiments of this application, the communication apparatus may be the first node, or a chip or a system-on-a-chip in the first node. When the communication apparatus has functions of the second node described in embodiments of this application, the communication apparatus may be the second node, or a chip or a system-on-a-chip in the second node.

As shown in FIG. 15, the communication apparatus may include a processor 1501, a communication line 1502, a transceiver 1503, and a memory 1504. The processor 1501, the memory 1504, and the transceiver 1503 may be connected to each other through the communication line 1502. In an example, the processor 1501 may include one or more CPUs, for example, a CPU 0 and a CPU 1 in FIG. 15.

In an optional implementation, the communication apparatus includes a plurality of processors, for example, may include a processor 1507 in addition to the processor 1501 in FIG. 15.

The processor 1501 may be a central processing unit (central processing unit, CPU), general-purpose processor, a network processor (network processor, NP), a digital signal processor (digital signal processor, DSP), a microprocessor, a microcontroller, a programmable logic device (programmable logic device, PLD), or any combination thereof. The processor 1501 may alternatively be another apparatus having a processing function, for example, a circuit, a device, or a software module.

The communication line 1502 is configured to transfer information between the components included in the communication apparatus.

The transceiver 1503 is configured to communicate with another device or another communication network. The another communication network may be an Ethernet, a radio access network (radio access network, RAN), a wireless local area network (wireless local area network, WLAN), or the like. The transceiver 1503 may be an interface circuit, a pin, a radio frequency module, a transceiver, or any apparatus that can implement communication.

Further, the communication apparatus may further include the memory 1504. The memory 1504 is configured to store instructions. The instructions may be a computer program.

The memory 1504 may be a read-only memory (read-only memory, ROM) or another type of static storage device that can store static information and/or instructions, may be a random-access memory (random-access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disc storage, or a magnetic disk storage medium or another magnetic storage device. The optical disc storage includes a compressed optical disc, a laser disc, an optical disc, a digital versatile disc, a Blu-ray disc, or the like.

It should be noted that the memory 1504 may be independent of the processor 1501, or may be integrated with the processor 1501. The memory 1504 may be configured to store the instructions, program code, some data, or the like. The memory 1504 may be located inside the communication apparatus, or may be located outside the communication apparatus. This is not limited. When executing the instructions stored in the memory 1504, the processor 1501 may implement the methods provided in embodiments of this application.

In an optional implementation, the communication apparatus further includes an output device 1505 and an input device 1506. For example, the input device 1506 is a device like a keyboard, a mouse, a microphone, or a joystick, and the output device 1505 is a device like a display or a speaker (speaker).

It should be noted that the communication apparatus may be a desktop computer, a portable computer, a network server, a mobile phone, a tablet computer, a wireless terminal, an embedded device, a chip system, or a device having a structure similar to that in FIG. 15. In addition, the composition structure shown in FIG. 15 does not constitute a limitation on the communication apparatus. In addition to the components shown in FIG. 15, the communication apparatus may include more or fewer components than those shown in the figure, or a combination of a part of the components, or an arrangement of different components.

In this embodiment of this application, the chip system may include a chip, or may include the chip and another discrete device.

FIG. 16 is a diagram of a structure of a communication apparatus 160. The communication apparatus 160 is used in a first node. Modules in the apparatus shown in FIG. 16 have functions of implementing the steps performed by the first node in FIG. 8 to FIG. 14, and can achieve corresponding technical effect thereof. For beneficial effect corresponding to the steps performed by the modules, refer to descriptions of the corresponding steps in FIG. 8 to FIG. 14. Details are not described again. The functions may be implemented by hardware, or may be implemented by the hardware executing corresponding software. The hardware or the software includes one or more modules corresponding to the foregoing functions. For example, the communication apparatus includes:
a transceiver module 1601, configured to send first information to a second node, where the first information is used to query a processing capability and/or energy supply information of at least one third node, and the transceiver module 1601 is further configured to receive second information, where the second information indicates the processing capability and/or the energy supply information of the at least one third node; and a processing module 1602, configured to determine, based on the second information, at least one target third node configured to execute a task.

FIG. 17 is a diagram of a structure of a communication apparatus 170. The communication apparatus 170 is used in a second node. Modules in the apparatus shown in FIG. 17 have functions of implementing the steps performed by the second node in FIG. 8 to FIG. 14, and can achieve corresponding technical effect thereof. For beneficial effect corresponding to the steps performed by the modules, refer to descriptions of the corresponding steps in FIG. 8 to FIG. 14. Details are not described again. The functions may be implemented by hardware, or may be implemented by the hardware executing corresponding software. The hardware or the software includes one or more modules corresponding to the foregoing functions. For example, the communication apparatus includes:
a transceiver module 1701, configured to receive first information, where the first information is used to query a processing capability and/or energy supply information of at least one third node; and a processing module 1702, configured to determine second information based on the first information, where the second information indicates the processing capability and/or the energy supply information of the at least one third node, and the transceiver module 1701 is further configured to send the second information.

FIG. 18 is a diagram of a structure of a communication apparatus 180. The communication apparatus 180 is used in a second node. Modules in the apparatus shown in FIG. 18 have functions of implementing the steps performed by the second node in FIG. 8 to FIG. 14, and can achieve corresponding technical effect thereof. For beneficial effect corresponding to the steps performed by the modules, refer to descriptions of the corresponding steps in FIG. 8 to FIG. 14. Details are not described again. The functions may be implemented by hardware, or may be implemented by the hardware executing corresponding software. The hardware or the software includes one or more modules corresponding to the foregoing functions. For example, the communication apparatus includes:
a transceiver module 1801, configured to receive fourth information, where the fourth information indicates a third node that needs to obtain an execution result of a task, and the transceiver module 1801 is further configured to receive a task parameter required for executing the task; and a processing module 1802, configured to execute the task based on the task parameter to obtain the execution result of the task, where the transceiver module 1801 is further configured to send the execution result to the third node that needs to obtain the execution result of the task.

An embodiment of this application further provides a communication system. The communication system includes a first node and a second node. The first node may have functions of the communication apparatus 160, and the second node may have functions of the communication apparatus 170.

In an implementation, the communication system may further include a third node, and the third node may have functions of the communication apparatus 180.

An embodiment of this application further provides a computer-readable storage medium. All or a part of procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the terminal apparatus, for example, including a data transmit end and/or a data receive end, according to any one of the foregoing embodiments, for example, a hard disk drive or a memory of the terminal apparatus. The computer-readable storage medium may alternatively be an external storage device of the terminal apparatus, for example, a plug-in hard disk drive, a smart media card (smart media card, SMC), a secure digital (secure digital, SD) card, or a flash card (flash card) configured on the terminal apparatus. Further, the computer-readable storage medium may include both the internal storage unit and the external storage device of the terminal apparatus. The computer-readable storage medium is configured to store the computer program and another program and data that are required by the terminal apparatus. The computer-readable storage medium may be further configured to temporarily store data that has been output or is to be output.

An embodiment of this application further provides computer instructions. All or a part of procedures in the foregoing method embodiments may be implemented by the computer instructions instructing related hardware (for example, a computer, a processor, a network device, and a terminal). The program may be stored in the foregoing computer-readable storage medium.

An embodiment of this application further provides a chip system. The chip system may include a chip, or may include the chip and another discrete device. This is not limited. The chip system includes a processor and a transceiver. All or a part of procedures in the foregoing method embodiments may be implemented by the chip system. For example, the chip system may be configured to implement functions performed by the first node in the foregoing method embodiments, or implement functions performed by the second node in the foregoing method embodiments.

In a possible design, the chip system further includes a memory. The memory is configured to store program instructions and/or data. When the chip system runs, the processor executes the program instructions stored in the memory, to enable the chip system to perform the functions performed by the first node in the foregoing method embodiments or perform the functions performed by the second node in the foregoing method embodiments.

In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can be used to carry or store expected program code in a form of an instruction or a data structure and that can be accessed by a computer, but is not limited thereto. The memory in this embodiment of this application may alternatively be a circuit or any other apparatus that can implement a storage function, and is configured to store instructions and/or data.

It should be noted that, in the specification, claims, and accompanying drawings of this application, the terms "first", "second", and the like are intended to distinguish between different objects but do not indicate a particular order. In addition, the terms "include" and "have" and any variants thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

It should be understood that, in embodiments of this application, "at least one" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between associated objects. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c, where a, b, and c may be singular or plural. It should be understood that, in embodiments of this application, "B corresponding to A" indicates that B is associated with A. For example, B may be determined based on A. It should be further understood that determining B based on A does not mean that B is determined only based on A. B may alternatively be determined based on A and/or other information. In addition, in embodiments of this application, a "connection" means various connection manners such as a direct connection or an indirect connection, for implementing communication between devices. This is not limited in embodiments of this application.

Unless otherwise specified, "transmission" (transmit/transmission) in embodiments of this application means bidirectional transmission, and includes a sending action and/or a receiving action. Specifically, "transmission" in embodiments of this application includes data sending, data receiving, or data sending and data receiving. In other words, data transmission herein includes uplink data transmission and/or downlink data transmission. The data may include a channel and/or a signal. Uplink data transmission is uplink channel transmission and/or uplink signal transmission, and downlink data transmission is downlink channel transmission and/or downlink signal transmission. In embodiments of this application, a "network" and a "system" express a same concept, and a communication system is a communication network.

Based on the descriptions of the foregoing implementations, a person skilled in the art may clearly understand that, for ease and brevity of description, division into the foregoing functional modules is merely used as an example for description. During actual application, the foregoing functions may be allocated to different functional modules for implementation based on a requirement, that is, an internal structure of the apparatus is divided into different functional modules, to implement all or a part of the functions described above.

In the several embodiments provided in this application, it should be understood that the disclosed apparatuses and methods may be implemented in other manners. For example, the apparatus embodiments described above are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may be or may not be physically separate, and parts displayed as units may be one or more physical units, may be located in one place, or may be distributed in different places. A part or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. The integrated unit may be stored in a readable storage medium when being implemented in the form of the software functional unit and sold or used as an independent product. Based on such an understanding, the technical solutions in embodiments of this application essentially, or the part contributing to the conventional technology, or all or a part of the technical solutions may be implemented in a form of a software product. The software product is stored in a storage medium, and includes several instructions for instructing a device that may be, for example, a single-chip microcomputer or a chip, or a processor (processor) to perform all or a part of the steps of the methods described in embodiments of this application. The foregoing storage medium includes any medium that can store program code, for example, a USB flash drive, a removable hard disk driver, a ROM, a RAM, a magnetic disk, or an optical disc. The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, applied to a first node, and comprising:
sending first information to a second node, wherein the first information is used to query a processing capability and/or energy supply information of at least one third node;
receiving second information, wherein the second information indicates the processing capability and/or the energy supply information of the at least one third node; and
determining, based on the second information, at least one target third node configured to execute a task.

2. The communication method according to claim 1, wherein the method further comprises:
sending third information to the second node, wherein the third information indicates a third node that needs to obtain an execution result of the task and the at least one target third node.

3. The communication method according to claim 1 or 2, wherein the second information comprises identification information of the at least one third node and corresponding energy supply information of the at least one third node, and the method further comprises:
determining, based on the energy supply information in the second information, time for each target third node to execute the task.

4. The communication method according to any one of claims 1 to 3, wherein the first information further indicates information about a range in which a third node that needs to be queried is located.

5. The communication method according to any one of claims 1 to 4, wherein the method further comprises:
sending sixth information to the second node, wherein the sixth information indicates to invoke a historical processing result of the task.

6. The communication method according to any one of claims 1 to 5, wherein the task comprises at least one of the following: model training, model testing, model emulation, model loading, or model inference.

7. The communication method according to any one of claims 1 to 6, wherein the processing capability comprises at least one of the following:
a hardware processing capability, a storage capability, or hardware energy efficiency information; and
the energy supply information comprises at least one of the following:
an energy supply energy type, energy availability time, or a carbon emission per unit of energy.

8. A communication method, applied to a second node, and comprising:
receiving first information, wherein the first information is used to query a processing capability and/or energy supply information of at least one third node;
determining second information based on the first information, wherein the second information indicates the processing capability and/or the energy supply information of the at least one third node; and
sending the second information.

9. The communication method according to claim 8, wherein the method further comprises:
receiving third information, wherein the third information indicates a third node that needs to obtain an execution result of a task and a target third node configured to execute the task; and
sending fourth information to the target third node that executes the task, wherein the fourth information indicates the third node that needs to obtain the execution result of the task.

10. The communication method according to claim 9, wherein the method further comprises:
receiving sixth information, wherein the sixth information indicates to invoke a historical processing result; and
sending the sixth information to the target third node.

11. The communication method according to any one of claims 8 to 10, wherein the first information further indicates information about a range in which a third node that needs to be queried is located.

12. The communication method according to any one of claims 8 to 11, wherein the method further comprises:
obtaining the processing capability and/or the energy supply information of the at least one third node.

13. A communication method, applied to a third node that executes a task, and comprising:
receiving fourth information, wherein the fourth information indicates a third node that needs to obtain an execution result of the task;
receiving a task parameter required for executing the task;
executing the task based on the task parameter to obtain the execution result of the task; and
sending the execution result to the third node that requires the task.

14. The communication method according to claim 13, wherein the third node that executes the task stores a historical task parameter and a corresponding historical processing result; and
executing the task based on the task parameter to obtain the execution result of the task comprises:
determining a target historical processing result as the execution result of the task, wherein the historical task parameter corresponding to the target historical processing result matches the task parameter.

15. A communication apparatus, used in a first node, and comprising:
a transceiver module, configured to send first information to a second node, wherein the first information is used to query a processing capability and/or energy supply information of at least one third node, wherein
the transceiver module is further configured to receive second information, wherein the second information indicates the processing capability and/or the energy supply information of the at least one third node; and
a processing module, configured to determine, based on the second information, at least one target third node configured to execute a task.

16. The communication apparatus according to claim 15, wherein the apparatus further comprises:
the transceiver module, configured to send third information to the second node, wherein the third information indicates a third node that needs to obtain an execution result of the task and the at least one target third node.

17. The communication apparatus according to claim 15 or 16, wherein the second information comprises identification information and the corresponding energy supply information of the at least one third node, and the processing module is further configured to:
determine, based on the energy supply information in the second information, time for each target third node to execute the task.

18. The communication apparatus according to any one of claims 15 to 17, wherein the first information further indicates information about a range in which a third node that needs to be queried is located.

19. The communication apparatus according to any one of claims 15 to 18, wherein the transceiver module is further configured to:
send sixth information to the second node, wherein the sixth information indicates to invoke a historical processing result of the task.

20. The communication apparatus according to any one of claims 15 to 19, wherein the task comprises at least one of the following: model training, model testing, model emulation, model loading, or model inference.

21. The communication apparatus according to any one of claims 15 to 20, wherein the processing capability comprises at least one of the following:
a hardware processing capability, a storage capability, or hardware energy efficiency information; and
the energy supply information comprises at least one of the following:
an energy supply energy type, energy availability time, or a carbon emission per unit of energy.

22. A communication apparatus, used in a second node, and comprising:
a transceiver module, configured to receive first information, wherein the first information is used to query a processing capability and/or energy supply information of at least one third node; and
a processing module, configured to determine second information based on the first information, wherein the second information indicates the processing capability and/or the energy supply information of the at least one third node, wherein
the transceiver module is further configured to send the second information.

23. The communication apparatus according to claim 22, wherein the transceiver module is further configured to receive third information, wherein the third information indicates a third node that needs to obtain an execution result of the task and a target third node configured to execute the task; and
the transceiver module is further configured to send fourth information to the target third node that executes the task, wherein the fourth information indicates the third node that requires the task.

24. The communication apparatus according to claim 23, wherein the transceiver module is further configured to:
receive sixth information, wherein the sixth information indicates to invoke a historical processing result; and
send the sixth information to the target third node.

25. The communication apparatus according to any one of claims 22 to 24, wherein the first information further indicates information about a range in which a third node that needs to be queried is located.

26. The communication apparatus according to any one of claims 22 to 25, wherein the processing module is further configured to:
obtain the processing capability and/or the energy supply information of the at least one third node via the transceiver module.

27. A communication apparatus, used in a third node that executes a task, and comprising:
a transceiver module, configured to receive fourth information, wherein the fourth information indicates a third node that requires the task, wherein
the transceiver module is further configured to receive a task parameter required for executing the task; and
a processing module, configured to execute the task based on the task parameter to obtain an execution result of the task, wherein
the transceiver module is further configured to send the execution result to the third node that requires the task.

28. A communication apparatus, wherein the communication apparatus comprises a processor and a transceiver, and the processor and the transceiver are configured to support the communication apparatus in performing the method according to any one of claims 1 to 14.

29. A computer-readable storage medium, wherein the computer-readable storage medium stores computer instructions, and when the computer instructions are run, the method according to any one of claims 1 to 14 is performed.

30. A communication system, wherein the communication system comprises a first node and a second node, or the communication system comprises the first node, the second node, and a third node; the first node is configured to perform the method according to any one of claims 1 to 7; the second node is configured to perform the method according to any one of claims 8 to 12; and the third node is configured to perform the method according to claim 13 or 14.
